# EUROPEAN PATENT APPLICATION

(11) **EP 1 478 183 A1**
(43) Date of publication of application: **17.11.2004**
(21) Application number: 04003548.7
(22) Date of filing: 17.02.2004
(51) Int. Cl.: H04N 7/22, H04J 3/16, H04H 1/02

(54) **Subscriber optical distributor for broadcasting-telecommunications convergence service**

(30) Priority: 16.05.2003 KR 2003031160
(71) Applicant: Samsung Electronics Co., Ltd., Suwon-city, Gyeonggi-do (KR)
(72) Inventor: Kim, Chan-Yul, c/o Samsung Electronics Co., Ltd., Gyeonggi-do (KR); Koh, Jun-Ho, c/o Samsung Electronics Co., Ltd., Gyeonggi-do (KR); Oh, Yun-Je, c/o Samsung Electronics Co., Ltd., Gyeonggi-do (KR)
(74) Representative: Grünecker, Kinkeldey, Stockmair & Schwanhäusser Anwaltssozietät

(57) **Abstract**

A subscriber optical distributor and method for a broadcasting-telecommunications convergence service over an FTTH (Fiber To The Home) optical transmission network. An optical transceiver receives a TDM broadcasting-telecommunications optical signal, converts the optical signal to an electrical signal, and converts an uplink electrical signal received from a subscriber to an optical signal. A broadcasting/telecommunications signal distributor receives the electrical broadcasting-telecommunications signal and separates the received electrical signal into a broadcasting signal and a telecommunications signal. A broadcasting interface interfaces the broadcasting signal received from the broadcasting/telecommunications signal distributor. A telecommunications interface transmits the telecommunications signal received from the broadcasting/telecommunications signal distributor, and provides the uplink signal to the optical transceiver.

## Description

### BACKGROUND OF THE INVENTION

### 1. Field of the Invention

The present invention relates the convergence of broadcasting and telecommunications. More particularly, the present invention relates to a subscriber device in a transmission network capable of providing a broadcasting-telecommunications convergence service.

### 2. Description of the Related Art

The features of broadcasting generally include unidirectionality, reception by unspecified persons, and identical service and network providers. In the area of telecommunications, the features include bidirectionality, one-to-one transmission/reception, and discrepancy between a service provider and a network provider.

These features of broadcasting and telecommunications are listed in Table 1 below.

**(Table 1)**

| | Broadcasting | Communication |
|---|---|---|
| Recipient | Unspecified persons | Specified persons |
| Charge | Free | Charged |
| Direction | Unidirectional | Bidirectional |
| Contents | Open | Restricted (Confidential) |
| Network provision/ Contents provision | Identical | Different |

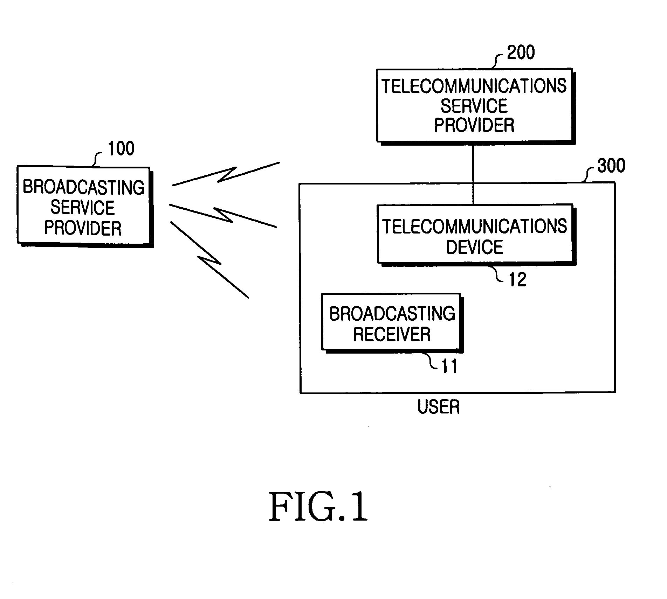

As shown above in the table, there are many differences between these sectors. Accordingly, the services are provided over different networks by different service providers. FIG 1 is a schematic view illustrating conventional broadcast and telecommunications services.

With reference to FIG 1, a broadcasting service provider 100 and a telecommunications service provider 200 both provide their services to a user 300 in different manners. As shown in the drawings, the user 300 is equipped with a broadcasting receiver 11 for receiving the broadcasting service and a telecommunications device 12 for connecting to the telecommunications service.

However, as the bandwidth of a communication network becomes wider and the data rate rapidly increases, the convergence of the broadcasting and telecommunications services becomes more and more possible, and this possibility is actively discussed among technical service providers, etc.

Though various interpretations of convergence can be formed, the OECD defined convergence in 1992 as the blurring of technical and regulatory boundaries between the sectors of broadcasting and telecommunications. Although the broadcasting-telecommunications convergence can be considered in three aspects, technically there are two aspects that require the most consideration.
(1) Convergence of Networks: Traditionally, it was common practice that a broadcasting service was provided over a broadcasting network and telecommunications over a communication network. Conversely, broadcasting also can be conducted over the communication network, and telecommunications can be broadcast over the broadcasting network under current technology. As a result, both broadcasting and telecommunications can share the same resources. In some cases, they actually can compete for dedicated use of resources. Thus, broadcasting and telecommunications will evolve ultimately to integrated networks that are a hybrid of the unication satellites and a CATV network installation using communication poles, whereas telecommunications using broadcasting resources finds its applications in telephone service over a CATV network and transmission of data or paging signals by terrestrial broadcasting waves.
(2) Convergence of Service Provisions: Broadcasting and telecommunications are being introduced into each other's area. In addition to the recent technological developmental that have increased the possibility of convergence, a novel service having the intermediate characteristics of both of those sectors emerges, and an existing medium is adopted for new uses. The former includes datacasting, video conferencing, and VOD (Video On Demand), and the latter includes telemarketing and fax advertisement.

As the convergence of broadcasting and telecommunications has been discussed, an FTTx (Fiber To The x) optical transmission network attracts much attention and a broadcasting-telecommunications convergence service between an OLT (Optical Line Terminal) and an ONU (Optical Network Unit) over the FTTx optical transmission network shall also discussed, infra.

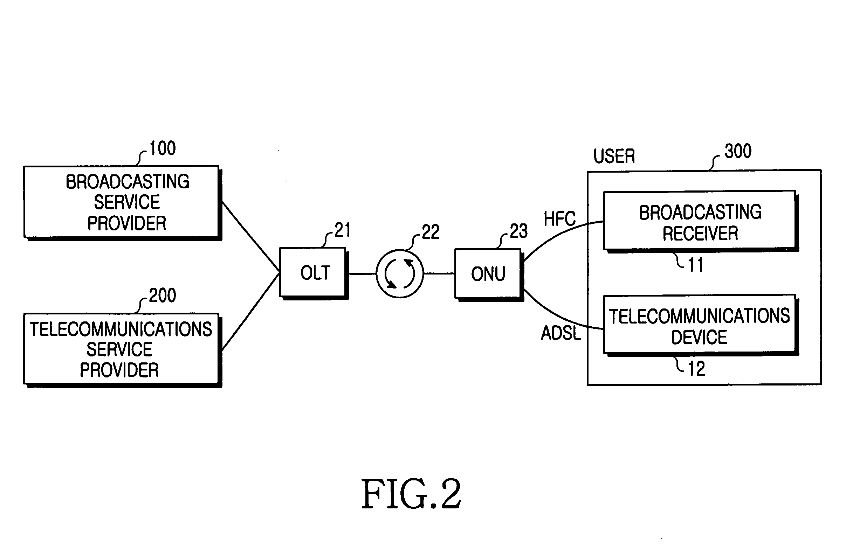

FIG 2 illustrates a conventional FTTx optical transmission network for providing a broadcasting service and a telecommunications service. The broadcasting service provider 100 and the telecommunications service provider 200 both provide their services to an Optical Line Terminal 21. The OLT 21 is connected to an Optical Network Unit 23 by an optical cable 22. The ONU 23 transmits the broadcasting service and the telecommunications service separately to the user 300. Specifically, the broadcasting service is provider over an HFC (Hybrid Fiber Coaxial) cable network or a radio network, whereas the telecommunication service is provided over a communication network such as an xDSL network. The user 300 is able to receive the services via the broadcasting receiver 11 and/or the communication device.

With respect to the above discussion regarding optical transmission networks, it is expected that in the near future an optical transmission network will be built in the FTTH (Fiber To The Home) manner that connects each subscriber by an optical fiber. Therefore, the broadcasting service and the telecommunications service will be integrated for each subscriber for combined access.

From the viewpoint of a subscriber, there are no optical subscriber devices that process an integrated broadcasting-telecommunications signal under the FTTH environment. Additionally, the existing optical transmission/reception devices are very expensive. Accordingly, there is a need for developing inexpensive optical transmission/reception devices.

### SUMMARY OF THE INVENTION

It is, therefore, an object of the present invention to provide an optical distributor for that can be used by a subscriber, for use with a broadcasting-telecommunications convergence service in an FTTH optical transmission network.

It is another object of the present invention to provide a method of designing a low-cost optical distributor for a subscriber applied to a broadcasting-telecommunications convergence service in an FTTH optical transmission network, by use of a low-cost optical transceiver.

The above objects are achieved by the present invention, which comprises a subscriber optical distributor for a broadcasting-telecommunications convergence service over an FTTH optical transmission network. The invention includes both an optical distributor and a broadcasting/ telecommunications signal distributor.

In the optical distributor, an optical transceiver receives a TDM broadcasting-telecommunications optical signal, converts the optical signal to an electrical signal, and then converts an uplink electrical signal received from a subscriber to an optical signal. A broadcasting/telecommunications signal distributor next receives the electrical broadcasting-telecommunications signal and separates this received electrical signal into a broadcasting signal and a telecommunications signal. Also provided is a broadcasting interface for interfacing the broadcasting signal received from the broadcasting/telecommunications signal distributor. A telecommunications interface transmits the telecommunications signal received from the broadcasting/telecommunications signal distributor, and provides the uplink signal to the optical transceiver.

### BRIEF DESCRIPTION OF THE DRAWINGS

The above and other objects, features and advantages of the present invention will become more apparent from the following detailed description when taken in conjunction with the accompanying drawings in which:
FIG 1 is a schematic view illustrating provisioning of conventional broadcasting and telecommunications services;
FIG 2 is a block diagram of a conventional FTTx optical transmission network for providing a broadcasting service and a telecommunications service;
FIG 3 is a block diagram of an FTTH optical transmission network to which the present invention is applied;
FIG 4 is a block diagram of a subscriber optical distributor for use in a broadcasting-telecommunications convergence service according to the present invention; and
FIG 5 illustrates a VCSEL (Vertical Cavity Surface Emitting Laser) transceiver for the subscriber optical distributor for the broadcasting-telecommunications convergence service according to the present invention.

### DETAILED DESCRIPTION OF THE PREFERRED EMBODIMENT

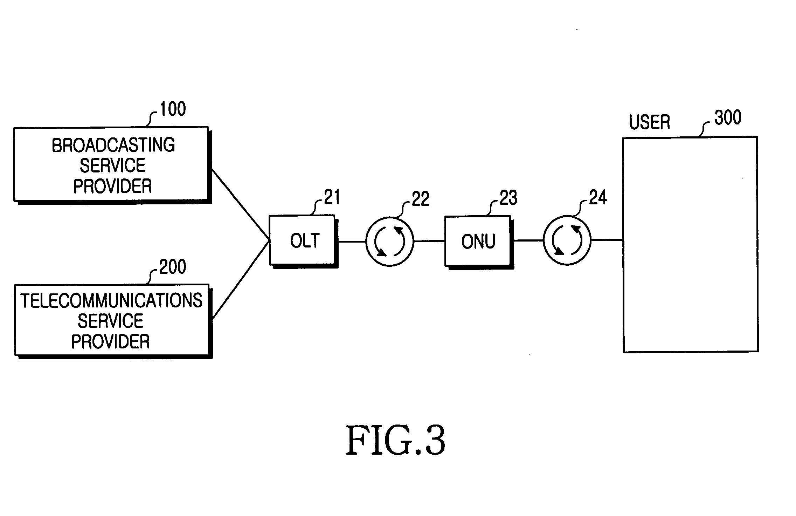

A preferred embodiment of the present invention will be described herein below with reference to the accompanying drawings. In the following description, well-known functions or constructions are not described in when it is believed that they would obscure the invention. FIG 3 is a block diagram of an FTTH optical transmission network to which the present invention can be applied. Referring to FIG 3, the FTTH optical transmission network comprises of the OLT 21 functioning as a subsystem for converting input broadcasting and communication signals to optical signals and outputting them as one optical signal. The ONU 23 feeds the optical signal in time slots to the user 300 A first optical cable 22 connects the OLT 21 to the ONU 23; and a second optical cable 24 connects the ONU 23 to the user 300. Broadcast service provided by the broadcasting service provider 100 includes digital/analog broadcasting, and telecommunications service provided by the telecommunications service provider 200 includes and voice call, video service, and high-speed Internet browsing.

A subscriber optical distributor (box 300) for application to a broadcasting-telecommunications convergence service according to the present invention is connected to the second optical cable 24.

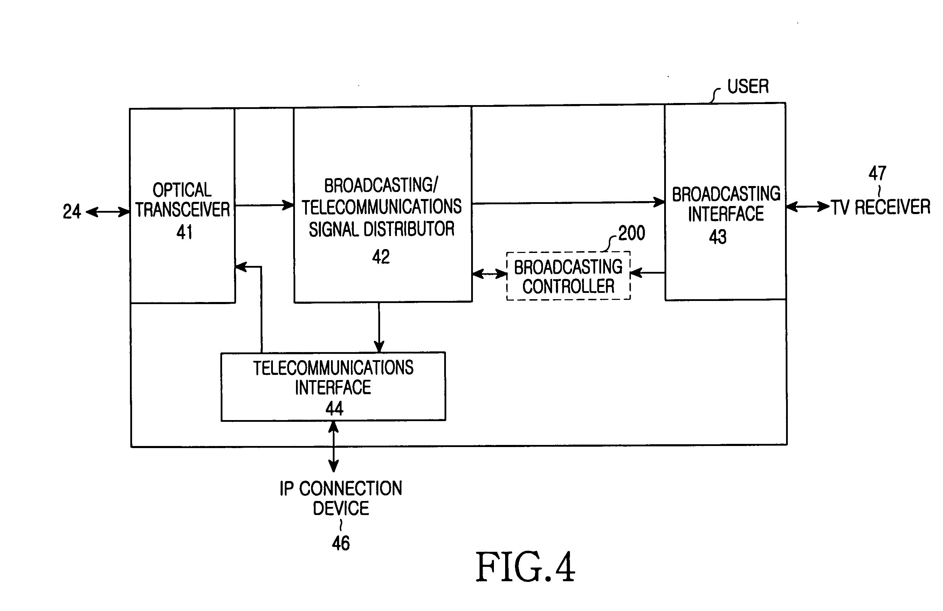

FIG 4 is a detailed block diagram of the box 300 shown in Fig. 3, other referred to as the subscriber optical distributor according to the present invention. Referring to FIG 4, the subscriber optical distributor has an optical transceiver 41 that converts a received TDM (Time Division Multiplex) optical broadcasting-telecommunication signal to an electrical signal and converts an uplink signal received from the user to an optical signal; a broadcasting/telecommunications signal distributor 42 separates the broadcasting-telecommunication signal into a broadcasting signal and a telecommunications signal, a broadcasting interface 43 interfaces with the broadcast signal received from the broadcasting/telecommunications signal distributor 42; and a telecommunications interface 44 interfaces with the telecommunications signal between the user and the broadcasting/telecommunications signal distributor 42.

In the broadcasting service, the transmission of all digital broadcast channels as in conventional analog broadcasts increases the processing complexity when the number of the digital broadcast channels is increased and causes a channel waste, because each digital broadcast channel is assigned to a large bandwidth and delivers a large amount of data. To remedy this problem, a TV receiver 47 (or a set top box) or a higher-layer end is used for selecting a channel for digital broadcasting. In this context, the optical distributor according to the present invention further includes a broadcasting controller 45 for transmitting user channel selection information received from the broadcasting interface 43 to the broadcasting/telecommunications signal distributor 42. The channel selection information is delivered to the OLT 21 or the ONU 23 via the optical transceiver 41, so that only a selected channel is transmitted.

In an embodiment of the present invention, an IEEE (Institute Electrical and Electronics Engineers) 1394 interface is used as the broadcasting interface 43, and an Ethernet interface or WLL (Wireless Local Loop) interface is used as the telecommunications interface 44. It should be understood that the present invention is in no way limited to 1394 and Ethernet interfaces or equivalents thereof.

During operation, the optical transceiver 41 receives a baseband broadcasting-telecommunications optical signal at or above 155Mbps, in which an MPTS (Multi Program Transfer Stream) and Ethernet packet data are multiplexed in TDM, via the second optical cable 24, converts this optical signal to an electrical signal, and provides this electrical signal to the broadcasting/telecommunications signal distributor 42. The optical transceiver 41 also receives an uplink signal from the user, converts the electrical signal to an optical signal, and transmits it to the ONU 23 via the second optical cable 24.

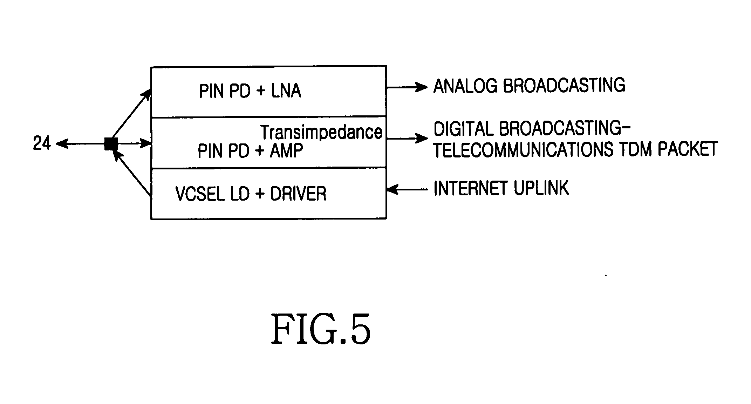

The present invention is intended to provide a method of designing the optical transceiver 41 with low cost by limiting transmission/reception distance of the converged forms of communication.. Though the transmission/reception distance is limited to 1KM or less, implementation of the optical transceiver 41 as a VCSEL transceiver reduces its cost. It is well-known in the art that when the transmission distance is restricted to 500m or less for an optical transceiver adopting a VCSEL LD, a data rate of about 155 to 622Mbps can be obtained. The VCSEL transceiver will be described in detail with reference to FIG 5.

The broadcasting/telecommunications signal distributor 41 is used to separate the broadcasting-telecommunications signal into a broadcasting signal and a telecommunications signal. In other words, the broadcasting-telecommunications signal extracts the time frame data and a clock signal from the broadcasting-telecommunications signal received from the optical transceiver 41 using a PLL (Phase Locked Loop), and separates broadcasting data and Ethernet packet data from the time frame data.

Additionally, the broadcasting interface 43 converts the broadcasting data received from the broadcasting/telecommunications signal distributor 42 in the format of IEEE 1394, a DTV standard interface. Meanwhile, if the separated communication data is Ethernet packet data, the telecommunications interface 44 then transmits the Ethernet packet data to an IP connection device 46.

FIG 5 illustrates the VCSEL transceiver for the subscriber optical distributor for the broadcasting-telecommunications convergence service according to the present invention. Referring to FIG 5, the VCSEL transceiver is comprised of an analog-broadcasting receiver with a PIN-PD (Photo Diode) and an LNA (Low Noise Amplifier), a broadcasting-telecommunications signal receiver with a PIN-PD and a transimpendance amplifier, for receiving a broadcasting-telecommunications signal, and a transmitter for an Ethernet uplink.

Therefore, the thus-constituted VCSEL transceiver supports analog broadcasting and receives a multiplexed broadcasting-telecommunications signal in wavelength division.

In accordance with an aspect of the present invention, a subscriber device provides a broadcasting signal and a telecommunications signal separately to a subscriber in a broadcasting-telecommunications convergence service over an FTTH optical transmission network. The use of a low-price VCSEL transceiver reduces the cost of a subscriber optical distributor for the broadcasting-telecommunications convergence service.

Finally the broadcasting interface and the telecommunications interface process the separate broadcasting and telecommunications signals in corresponding formats, which increases adaptability to various standards.

While the invention has been shown and described with reference to a certain preferred aspects and embodiments thereof, it is a mere exemplary application for illustration and For example, while the broadcasting interface 43 uses IEEE 1394, USB (Universal Serial Bus) 2.0 is also available. Also, while the telecommunications interface 44 processes Ethernet packet data, a radio home network can be built using the radio network standard for a WLL 2.4GHs band. Needless to say, B-WWL (Broad-WLL) is also available. Besides, the broadcasting interface 43 and the telecommunications interface 44 can be configured as interfaces supporting various types of protocols according to a given standard. Thus, it will be understood by those skilled in the art that various changes in form and details may be made therein without departing from the spirit of the invention and the scope of the appended claims.

## Claims

1. A subscriber optical distributor (300) for a broadcasting-telecommunications convergence service over an Fiber To The Home optical transmission network, said distributor (300) comprising:
an optical transceiver (41) for receiving a Time Division Multiplex broadcasting-telecommunications optical signal, converting the optical signal to an electrical signal, and converting an uplink electrical signal received from a subscriber to an optical signal;
a broadcasting/telecommunications signal distributor (42) for receiving the electrical broadcasting-telecommunications signal and for separating the received electrical signal into a broadcasting signal and a telecommunications signal for further distribution;
a broadcasting interface (43) for interfacing with the broadcasting signal received from the broadcasting/telecommunications signal distributor (42); and
a telecommunications interface (44) for interfacing with the telecommunications signal received from the broadcasting/telecommunications signal distributor (42), and providing the uplink signal to the optical transceiver (41).

2. The subscriber optical distributor (300) of claim 1, further comprising a broadcasting controller (200) for receiving channel selection information regarding the subscriber from the broadcasting interface (43), and providing the channel selection information to the broadcasting/telecommunications signal distributor (42), so that only broadcasting data for a selected channel is output.

3. The subscriber optical distributor (300) of claim 1 or 2, wherein the optical transceiver is implemented as a Vertical Cavity Surface Emitting Laser transceiver.

4. The subscriber optical distributor (300) of claim 3, wherein the Vertical Cavity Surface Emitting Laser transceiver comprises:
an analog broadcasting receiver having a PIN-Photo Diode and a Low Noise Amplifier;
a broadcasting-telecommunications signal receiver having a PIN-Photo Diode and a transimpendance amplifier, for receiving the Time Division Multiplex broadcasting-telecommunications signal; and
a transmitter for an Ethernet uplink.

5. The subscriber optical distributor (300) of claim 1, 2 or 3, wherein the broadcasting/telecommunications signal distributor (42) receives the broadcasting-telecommunications signal from the optical transceiver (41), extracts time frame data and a clock signal of Time Division Multiplex from the received broadcasting-telecommunications signal, and separating the time frame data into broadcasting data and Ethernet packet data.

6. The subscriber optical distributor (300) of claim 5, wherein an internal Phase Locked Loop is used for extracting time frame data and clock signal.

7. A method of operating a subscriber optical distributor (300) for receiving broadcasting-telecommunications convergence service over a Fiber To The Home optical transmission network, said method comprising:
(a) receiving a Time Division Multiplex broadcasting-telecommunications optical signal from an optical transceiver (41), converting the optical signal to an electrical signal,
(b) receiving the electrical broadcasting-telecommunications signal that has been converted by the optical transceiver (41) into an electrical signal;
(c) separating the received electrical signal into a broadcasting signal and a telecommunications signal for further distribution;
(d) interfacing the broadcasting signal with a broadcasting interface (43);
(e) interfacing a telecommunications signal with the telecommunications interface (44), and
(f) providing an uplink electrical signal received from a subscriber to the optical transceiver (41) for conversion.

8. The method according to claim 7, further comprising:
(g) providing a broadcasting controller (200) for receiving channel selection information regarding the subscriber from the broadcasting interface (43), and
(h) providing the channel selection information to the broadcasting/telecommunications signal distributor (42), so that only broadcasting data for a selected channel is output.

9. The method according to claim 7 or 8, wherein the optical transceiver (41) used in steps (b) and (f) is implemented as a Vertical Cavity Surface Emitting Laser transceiver.

10. The method according to claim 9, wherein the Vertical Cavity Surface Emitting Laser transceiver used in the method comprises:
an analog broadcasting receiver having a PIN-Photo Diode and a Low Noise Amplifier;
a broadcasting-telecommunications signal receiver having a PIN-Photo Diode and a transimpendance amplifier, for receiving the Time Division Multiplex broadcasting-telecommunications signal; and
a transmitter for an Ethernet uplink.

11. The method according to claim 7, 8, 9 or 10, wherein the broadcasting/telecommunications signal distributor (42) receives the broadcasting-telecommunications signal from the optical transceiver (41), extracts time frame data and a clock signal of Time Division Multiplex from the received broadcasting-telecommunications signal, and separates the time frame data into broadcasting data and Ethernet packet data.

12. The method according to claim 11, wherein an internal Phase Locked Loop is used to extract time frame data and the clock signal.
